# EUROPEAN PATENT SPECIFICATION

(11) **EP 1 869 283 B1**
(45) Date of publication and mention of the grant of the patent: **28.06.2017**
(21) Application number: 06749691.9
(22) Date of filing: 11.04.2006
(51) Int. Cl.: B01D 21/26

(54) **APPARATUS AND METHOD FOR RECOVERING OIL-BASED DRILLING MUD**
VORRICHTUNG UND VERFAHREN ZUR RÜCKGEWINNUNG VON ÖLBASIERTEM BOHRSCHLAMM
APPAREIL ET PROCÉDÉ DE RÉCUPÉRATION DE BOUE DE FORAGE À BASE DE PETROLE

(30) Priority: 11.04.2005 US 102952; 15.12.2005 US 300940; 11.04.2005 US 670528 P
(43) Date of publication of application: 26.12.2007
(73) Proprietor: M-I L.L.C., Houston, TX 77072 (US)
(72) Inventor: IVAN, Catalin, Sugar Land, TX 77478 (US); BROWNE, Neale, Houston, Texas 77098 (US)
(74) Representative: Gill, Stephen Charles
(86) International application number: PCT/US2006/013381
(87) International publication number: WO 2006/110691

(56) References cited:
- EP-A- 0 936 344
- GB-A- 2 044 796
- JP-A- 02 038 695
- US-A- 4 580 627
- US-A- 4 759 913
- US-A- 4 938 876
- US-A- 6 036 870
- US-A1- 2004 094 483
- US-B2- 6 695 077

## Description

### BACKGROUND OF INVENTION

In the process of rotary drilling a well, drilling fluid, or mud, is circulated down the rotating drill pipe, through the bit, and up the annular space between the pipe and the formation or steel casing, to the surface. The drilling fluid performs different functions such as removal of cuttings from the bottom of the hole to the surface, to suspend cuttings and weighting material when the circulation is interrupted, control subsurface pressure, isolate the fluids from the formation by providing sufficient hydrostatic pressure to prevent the ingress of formation fluids into the wellbore, cool and lubricate the drill string and bit, maximize penetration rate, etc.

The required functions can be achieved by a wide range of fluids composed of various combinations of solids, liquids and gases and classified according to the constitution of the continuous phase mainly in two groupings: aqueous drilling fluids, and oil-based drilling fluids. In drilling water-sensitive zones such as reactive shales, production formations, or where bottom hole temperature conditions are severe or where corrosion is a major problem, oil-based drilling fluids are preferred.

Oil-based drilling fluids typically contain oil-soluble surfactants that facilitate the incorporation of water-wet clay or non-clay formation minerals, and hence enable such minerals to be transported to surface equipment for removal from circulation before the fluid returns to the drill pipe and the drill bit. The largest formation particles are rock cuttings, the size typically larger than 0.1 to 0.2 mm, removed by shale-shaker screens at the surface. Smaller particles, typically larger than about 5 µm, will pass through the screens, and must be removed by centrifuge or other means.

Oil-based drilling fluids have been used for many years, and their application is expected to increase, partly owing to their several advantages over water based drilling fluids, but also owing to their ability to be re-used and recycled, so minimizing their loss and their environmental impact.

As mentioned above, during drilling, formation particles become incorporated into the drilling fluid. Unless these are removed, they eventually alter the fluid's
properties, particularly the rheological parameters, out of the acceptable range. However, formation particles that are less than about 5 to 7 µm in size are more difficult to remove than larger particles. These low gravity solids can build up in a mud system, causing inefficient drilling problems such as drill pipe sticking, increased pipe torque, and other high viscosity issues.

While low gravity solids may be removed from drilling fluids using mechanical means such as a centrifuge, it has been found that longer run-times are required to remove the colloidal particles, if the low gravity solids can be removed at all. Thus, there is a need for an apparatus that can be used with traditional solids separation equipment to reduce the run-time required to remove low gravity solids. Further, it would be an improvement in the art to have an apparatus that can be utilized both on active drilling projects to facilitate solids control equipment efficiency as well as by mud plants in reclaiming and/or reconditioning mud returned from field operations.

US-A-4938876 provides a process and apparatus for continuously separating oil, water and solids from stable mixtures thereof.

### SUMMARY

In one aspect, the invention relates to an apparatus for preparing an oil-based drilling fluid to be recovered, according to claim 1.

In another illustrated aspect, the invention relates to a method for recovering an oil-based drilling fluid according to claim 11.

Other aspects and advantages of the claimed subject matter will be apparent from the following description and the appended claims.

### BRIEF DESCRIPTION OF THE DRAWINGS

FIG. 1 is a schematic of an apparatus for preparing an oil-based drilling fluid for recovery.
FIG. 2 is a schematic of an alternative embodiment of an apparatus for preparing an oil-based drilling fluid for recovery.
FIG. 3 is a layout of the apparatus mounted on a skid.
FIG. 4 is a schematic of another alternative embodiment of an apparatus for preparing an oil-based drilling fluid for recovery.

### DETAILED DESCRIPTION

In one aspect, the claimed subject matter relates to an apparatus and method for preparing an oil-based drilling fluid for recovery. The oil-based drilling fluid includes oil, water, and solids in relative proportions consistent with used drilling fluid that has been subjected to preliminary processes to remove large solids from the fluid. The solids remaining in the drilling fluid typically include a percentage of high gravity solids and a percentage of low gravity solids. High gravity solids are those solids that are dense, as in barite or hematite, while low gravity solids are those solids that have a lower density than barite. The oil and water in the used drilling fluid are present in proportionate amounts, the relationship between them often being expressed as an oil-to-water ratio.

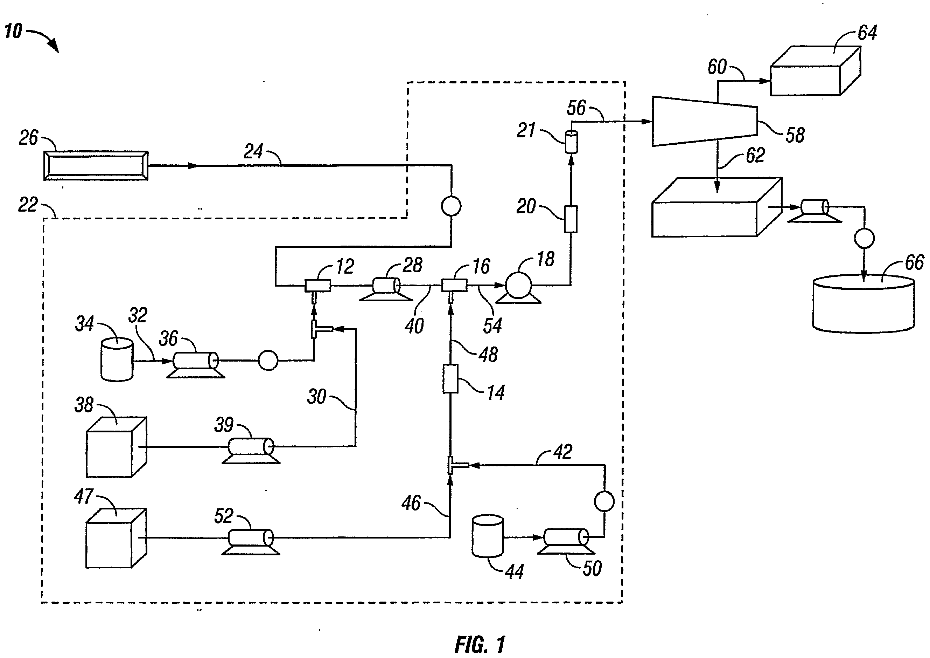

In an embodiment, shown in FIG. 1, the apparatus 10 includes a plurality of mixers 12, 14, 16, 18, and 20 that may be mounted to a common skid 22. Oil-based drilling fluid 24 is pumped from a mud plant 26 to the first mixer 12. A pump 28 may be used to introduce the drilling fluid 24 to the first mixer 12 with a predetermined pressure and flow rate. A surfactant 32 is pumped into the first mixer 12 from a surfactant tank 34. The surfactant 32 may be diluted with water 30 from water tank 38 prior to its introduction to the first mixer 12. A dosing pump 36 may be used to introduce the surfactant 32 to the mixer with a predetermined pressure and flow rate. The surfactant 32 acts on the mud solids, improving their hydrophilicity so that the polymer, which is very hydrophilic and added downstream, can flocculate the solids. In one embodiment, surfactant is injected into the mud in amount of about 3.0 % v/v.

The first mixer 12 preferably is a static shear mixer including an insert (not shown) that provides shear to the fluid passing through the first mixer 12 sufficient to mix the surfactant 32 and the drilling fluid 24. The surfactant 32 and the drilling fluid 24 are introduced to the first mixer 12 upstream from the insert and exit the mixer 12 as a surfactant treated mud 40.

A flocculant polymer 42 is stored in a flocculant storage tank 44 and may be mixed with a base fluid 46, when necessary, to form a flocculant mixture 48. The dilution of the flocculant polymer 42 with the base fluid 46 can improve the dispersal of the polymeric droplets into the mud. The decision to do this or not is based on the type of dosing equipment, the viscosities of the mud 24 and the flocculant polymer 42, and the strength to the mixing employed. As one of skill in the art will appreciate, the flocculent polymer 42 must be injectable by the dosing pump into the steam surfactant-treated mud 40. Thus, a very viscous flocculent polymer may require some dilution with a base fluid 46. The dilution should also consider the desired concentration of flocculent polymer to be injected.

Dosing pumps 50, 52 may be used to introduce the flocculant 42 and the base fluid 46, respectively, to the second mixer 14 in predetermined relative quantities. The second mixer 14 may be a static shear mixer including an elongated insert to enhance the dispersion of flocculant 42 within the base fluid 46 and to provide turbulence to the flow. The turbulence created by the insert causes the flocculant 42 and the base fluid 46 to form the flocculant mixture 48.

The flocculant mixture 48 is mixed with the surfactant treated mud 40 in a third mixer 16. The third mixer 16 may be a static mixer including an insert to provide shear to the passing fluids sufficient to mix the fluids together. The addition of flocculant 48 to the surfactant treated mud 40 causes solid material in the surfactant treated mud 40 to coagulate around the flocs. Creating larger solid masses aids in their later removal from the drilling fluid.

The treated mud 54 is mixed further in additional downstream mixers 18, 20. A fourth mixer 18 may be a dynamic mixer. In the dynamic mixer 18, the treated mud 54 is subjected to agitation providing additional shearing to facilitate the coagulation of solids and floc. Additional mixers 20, 21 may be included. The additional mixers 20, 21 may be in-line mixers, providing additional mixing by subjecting the drilling fluid and polymer mixture 54 to shear as in the second mixer 14 discussed earlier. By including a plurality of mixers downstream from the injection of flocculant polymer 48, the exposure of solids to the flocculant is enhanced prior to directing the treated mud 54 to a separation process.

Upon exiting the final mixer 21, the treated mud 54 is a prepared mud mixture 56 ready for further processing to remove the solids from the fluid. The prepared mud mixture 56 may be directed to equipment outside of the skid 22 for additional processing. Such equipment may include a centrifuge 58 to which the prepared mud mixture 56 is directed. The centrifuge 58 includes a bowl that is rotated at a speed sufficient to separate the solids 60 in the prepared mud mixture 56 from the fluid, or effluent 62. As the solids 60 are discharged from the centrifuge 58, they may be collected in a cuttings box 64. Effluent 62 may be released to a fluid storage area 66, or directed to additional equipment (not shown) for further processing.

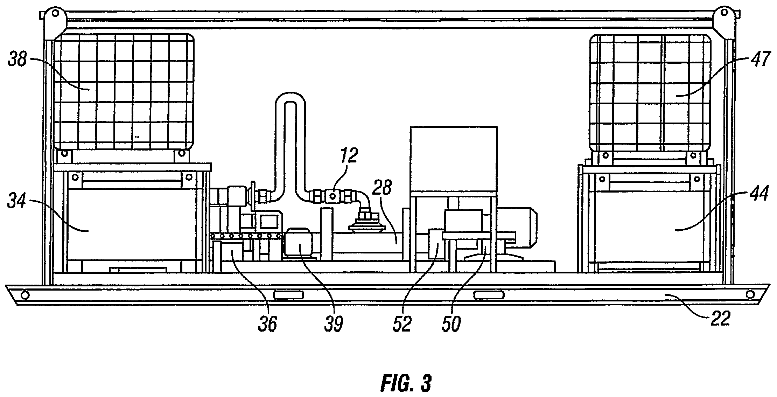

As previously stated, the equipment required to process the drilling fluid 24 prior to its being directed to the centrifuge 58 may be housed on a skid 22. To consolidate the equipment onto a single skid 22, attention must be given to the layout of the equipment. In one embodiment, shown in FIG. 3, water and base oil tanks 38, 47 are positioned directly above the surfactant and polymer tanks 34, 44. The water and base totes 38, 47 may be placed on rails so that they are movable to an outward position, away from the polymer and surfactant tanks 34, 44 for refilling.

Dosing pumps 36, 39, 50, 52 may be positioned on the skid 22 such that the polymer and base oil pumps are directly beside their respective tanks with one pump placed atop another to conserve space. Likewise, the surfactant and water pumps may be stacked to conserve space.

As previously discussed, the flocculant polymer 42 or flocculant mixture 48 added to the drilling fluid enhances removal of the solids 60 by the centrifuge 58 by forming larger solid particles. The polymer droplets have to be well dispersed into the mud to be flocculated, without dissolving the polymer. The droplets remain intact and adhere the solids in the mud together, thus greatly improving the solid-liquid separation efficiency upon centrifugation. In order to derive the most benefit from the polymeric droplets as a flocculant, it is necessary that they be well mixed into the mud, and at an efficacious dose. The amount of flocculant polymer 48 added to the surfactant treated mud 40 should be that sufficient to leave the polymeric droplets homogeneously dispersed throughout the mud 24 to be flocculated.

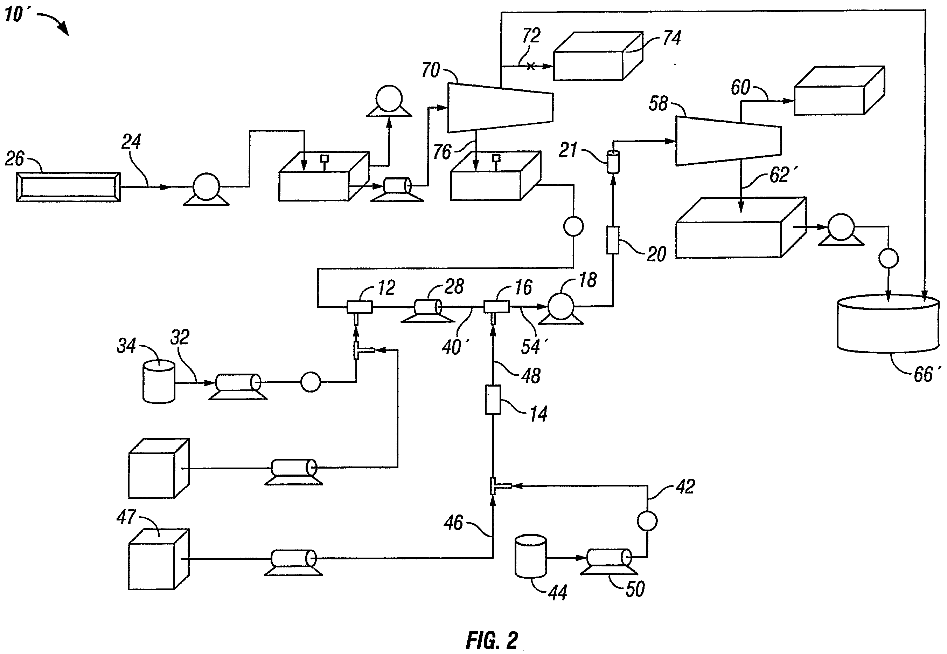

A second embodiment of the apparatus 10' is shown in FIG. 2. In this embodiment, the drilling fluid 24 is pumped from the mud plant 26 into a first centrifuge 70. The first centrifuge 70 is optimized to recover the weighting agent 72, such as barite, from the drilling fluid 24. The weighting agent 72 is discharged from the first centrifuge 70 to a cuttings box 74 or a storage tank 66' to be reintroduced to the recovered drilling fluid 62' discharged from the apparatus 10'. Effluent 76 from the first centrifuge 70 is pumped into the first mixer 12. As previously described, surfactant 32 is injected into the first mixer 12 and the effluent 76 and surfactant 32 are subjected to static shear sufficient to distribute the surfactant through the drilling fluid to form a surfactant treated effluent 40'.

A polymer mixture 48 is made by mixing a flocculant 42 and a base fluid 46 in a mixer 14, if a base fluid is needed. In one embodiment the flocculent 42 does not need to be mixed with a base fluid before injection to the flow of the surfactant treated effluent 40'. The polymer or polymer mixture 48 is directed to mixer 16 where it is mixed with the surfactant treated effluent 40', as previously described. If a base fluid is not needed, flocculant 42 may be directed to the mixer 16, in which it is mixed directly with the surfactant treated effluent 40' to form a treated mud 54'.

The treated mud 54' from the mixer 16 is directed through a series of additional mixers 18, 20, 21 to ensure there is sufficient mixing to prepare the treated mud 54' for separation and further processing. In one embodiment a dynamic mixer 18 and one or more inline mixers 20, 21 are provided to ensure sufficient mixing of the flocculant 42 within the surfactant treated effluent 40'.

A second centrifuge 58 may be used to separate solids 60' and effluent 62'. The recovered weighting agent 72 from the first centrifuge 70 may be added to the effluent 62' as needed to reproduce drilling fluid to be used in drilling operations.

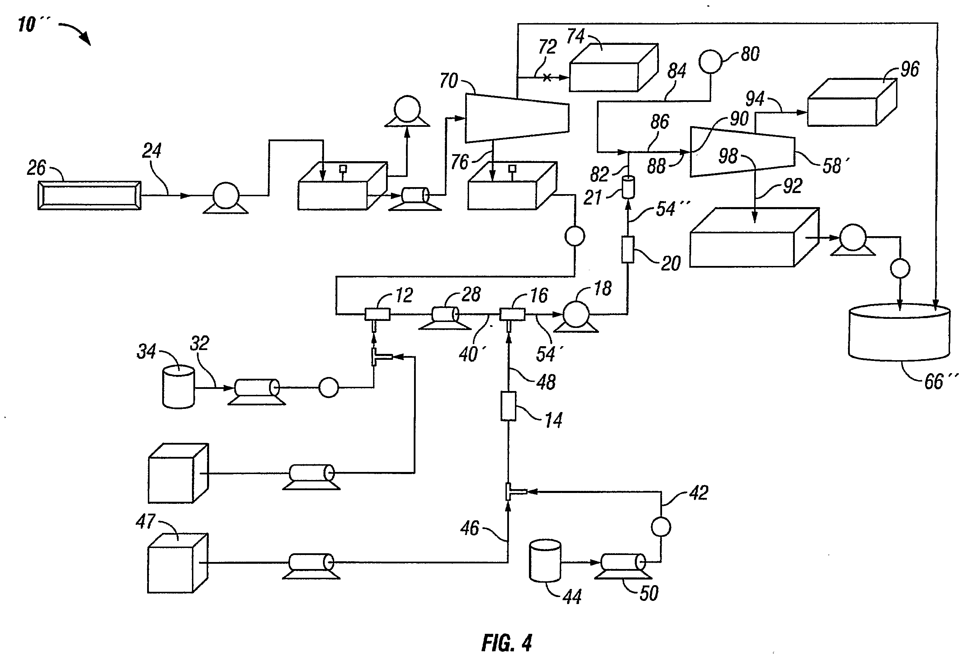

Referring to FIG. 4, the apparatus 10" includes a steam generator 80 and a second centrifuge 58'. In this embodiment, the drilling fluid 24 is pumped from the mud plant 26 into a first centrifuge 70. The first centrifuge 70 is optimized to recover the weighting agent 72, such as barite, from the drilling fluid 24. The weighting agent 72 is discharged from the first centrifuge 70 to a cuttings box 74 or a storage tank 66" to be reintroduced to the recovered drilling fluid 92 discharged from the apparatus 10". Effluent 76 from the first centrifuge 70 is pumped into the first mixer 12. As previously described, surfactant 32 is injected into the first mixer 12 and the effluent 76 and surfactant 32 are subjected to static shear sufficient to distribute the surfactant through the drilling fluid to form a surfactant treated effluent 40'.

A polymer mixture 48 is made by mixing a flocculant 42 and a base fluid 46 in a mixer 14, if a base fluid is needed. In one embodiment the flocculent 42 does not need to be mixed with a base fluid before injection to the flow of the surfactant treated effluent 40'. The polymer or polymer mixture 48 is directed to mixer 16 where it is mixed with the surfactant treated effluent 40', as previously described. If a base fluid is not needed, flocculant 42 may be directed to the mixer 16, in which it is mixed directly with the surfactant treated effluent 40' to form a treated mud 54".

The treated mud 54" from the one or more mixers 18, 20, 21 is directed into centrifuge 58' through a first line 82. The steam generator 80 provides steam to a second line 84. The second line 84 directs the steam into the first line 82 such that the steam and the treated mud 54" are commingled in a second portion 86 of the first line 82. The steam and treated mud mixture 88 then continue through the first line 82 through a centrifuge inlet 90.

The centrifuge 58' includes an internally located bowl (not shown) to which the mixture 88 is directed. The bowl is rotated at a rate sufficient to separate solids entrained in the treated mud 54" such that the solids remaining in the effluent 92 are less than 10% of the effluent. An internally located conveyor (not shown) directs solids towards a solids discharge 94 from the centrifuge 58' and collected in a cuttings box 96. The effluent 92 and any remaining solids are directed through an effluent discharge 98 from the centrifuge 58' to a holding tank 66".

In one embodiment, a smaller percentage of flocculent polymer or flocculent polymer mixture 48 is required when the use of steam generator 80 provides steam to the treated mud 54" followed separation in the centrifuge 58' to remove solid particles from the treated mud 54".

While the claimed subject matter has been described with respect to a limited number of embodiments, those skilled in the art, having benefit of this disclosure, will appreciate that other embodiments can be devised which do not depart from the scope of the claimed subject matter as disclosed herein. Accordingly, the scope of the claimed subject matter should be limited only by the attached claims.

## Claims

1. An apparatus for preparing used oil-based drilling fluid for recovery comprising:
a first dosing pump (36) dispensing a predetermined amount of surfactant (32) into the oil-based drilling fluid (24);
a first static mixer (12) mixing the oil-based drilling fluid and the surfactant to form a surfactant treated drilling fluid;
a second dosing pump (50) dispensing a predetermined amount of flocculating polymer (42) into the surfactant treated drilling fluid; and
a plurality of serially aligned mixers (16, 18, 20, 21);
**characterised in that**:
the serially aligned mixers are arranged to mix the surfactant treated drilling fluid and the flocculating polymer.

2. The apparatus of claim 1 wherein the plurality of serially aligned mixers includes a dynamic mixer (18).

3. The apparatus of claim 2 wherein the plurality of serially aligned mixers includes a static mixer (16).

4. The apparatus of claim 3, wherein the plurality of serially aligned mixers includes a plurality of static mixers (16, 20, 21) in fluid communication with the dynamic mixer, the static mixers shearing the surfactant treated drilling fluid and the flocculating polymer to disperse the flocculating polymer throughout the surfactant treated drilling fluid.

5. The apparatus of claim 1, further comprising:
a first flow meter controlling the flow rate of drilling fluid into the first static mixer; and
a second flow meter controlling the flow rate of surfactant into the first static mixer.

6. The apparatus of claim 1, further comprising:
a third dosing pump (52) dispensing a predetermined amount of base fluid (46) into the flocculating polymer; and
an in-line mixer (14) shearing the base fluid and flocculating polymer to disperse the flocculating polymer throughout the base fluid.

7. The apparatus of claim 1, further comprising:
a first centrifuge (70) receiving the oil-based drilling fluid, separating weighting agent (72) from the fluid, and directing the fluid to the first static mixer.

8. The apparatus of claim 7, further comprising:
a second centrifuge (58') receiving the treated fluid and separating the solids (60) from the recovered drilling fluid (62');
a steam generator (80) providing steam to the treated mud prior to entry to the second centrifuge.

9. The apparatus of claim 8, further comprising:
a storage tank (66") receiving the recovered drilling fluid from the second centrifuge.

10. The apparatus of claim 9 wherein the first centrifuge discharges the weighting agent to the storage tank and to the recovered drilling fluid.

11. A method for recovering an oil-based drilling fluid comprising:
mixing a predetermined amount of surfactant (32) with an oil-based drilling fluid (24) containing solids to form a surfactant treated drilling fluid;
mixing the surfactant treated drilling fluid with a predetermined amount of flocculating polymer (42) to form a treated mud (54);
mixing the treated mud and subjecting the treated mud to shear in a plurality of serially aligned mixers (16, 18, 20, 21) to disperse the flocculating polymer throughout the treated mud to cause the solids from the oil-based drilling fluid to adhere to the flocculating polymer;
separating the solids (60) adhered to the flocculating polymer from the treated mud;
collecting the separated solids; and
collecting the effluent (62).

12. The method of claim 11, further comprising mixing a base fluid (46) into the flocculating polymer.

13. The method of claim 11 wherein the separating step further comprises introducing the treated mud to a centrifuge (58, 58') to remove solids from the oil-based drilling fluid.

14. The method of claim 13, further comprising injecting steam to the treated mud.

15. The method of claim 11, further comprising separating weighting agent (72) from the oil-based drilling fluid with a first centrifuge (70) before mixing the predetermined amount of surfactant therewith.

16. The method of claim 15, further comprising injecting steam to the treated mud.

17. The method of claim 15, further comprising directing the separated weighting agent to the collected effluent from the last separating step.

18. The method of claim 11 further comprising injecting steam to the treated mud.

## Patentansprüche

1. Vorrichtung für das Herstellen eines zur Rückgewinnung verwendeten ölbasierten Bohrfluids, umfassend:
eine erste Dosierpumpe (36), die eine vorbestimmte Menge einer oberflächenaktiven Substanz (32) an das öl-basierte Bohrfluid (24) abgibt;
einen ersten statischen Mischer (12), der das öl-basierte Bohrfluid und die oberflächenaktive Substanz mischt, um ein, mit einer oberflächenaktiven Substanz behandeltes Bohrfluid auszubilden;
eine zweite Dosierpumpe (50), die eine vorbestimmte Menge eines Ausflockungspolymers (42) an das mit einer oberflächenaktiven Substanz behandelten Bohrfluid abgibt; und
eine Vielzahl von in einer Reihe ausgerichteten Mischern (16, 18, 20, 21);
**dadurch gekennzeichnet, dass**:
die in Reihe ausgerichteten Mischer so angeordnet sind, dass sie das mit einer oberflächenaktiven Substanz behandelte Bohrfluid und das Ausflockungspolymer mischen.

2. Vorrichtung nach Anspruch 1, worin die Vielzahl von in einer Reihe ausgerichteten Mischern einen dynamischen Mischer (18) umfasst.

3. Vorrichtung nach Anspruch 2, worin die Vielzahl von in einer Reihe ausgerichteten Mischern einen statischen Mischer (16) umfasst.

4. Vorrichtung nach Anspruch 3, worin die Vielzahl von in einer Reihe ausgerichteten Mischern eine Vielzahl von statischen Mischern (16, 20, 21) umfasst, die in Fluid-Kommunikation mit dem dynamischen Mischer sind, wobei die statischen Mischer das mit einer oberflächenaktiven Substanz behandelte Bohrfluid und das Ausflockungspolymer einer Scherung unterwerfen, um das Ausflockungspolymer überall im, mit der oberflächenaktiven Substanz behandelten Bohrfluid zu verteilen.

5. Vorrichtung nach Anspruch 1, ferner umfassend:
einen ersten Strömungsmesser, der die Strömungsrate von Bohrfluid in den ersten statischen Mischer hinein steuert; und
einen zweiten Strömungsmesser, der die Strömungsrate der oberflächenaktiven Substanz in den ersten statischen Mischer hinein steuert.

6. Vorrichtung nach Anspruch 1, ferner umfassend:
eine dritte Dosierpumpe (52), die eine vorbestimmte Menge an Basisfluid (46) in das Ausflockungspolymer abgibt; und
einen In-Reihe-Mischer (14), der das Basisfluid und das Ausflockungspolymer einer Scherung unterwirft, um das Ausflockungspolymer überall im Basisfluid zu verteilen.

7. Vorrichtung nach Anspruch 1, ferner umfassend:
eine erste Zentrifuge (70), die das öl-basierte Bohrfluid aufnimmt, wobei das Gewichtungsmittel (72) vom Fluid getrennt wird und das Fluid zum ersten Mischer geführt wird.

8. Vorrichtung nach Anspruch 7, ferner umfassend:
eine zweite Zentrifuge (58'), die das behandelte Fluid aufnimmt und die Feststoffe (60) vom rückgewonnenen Bohrfluid (62') trennt;
einen Dampfgenerator (80), der dem behandelten Bohrschlamm vor Eintreten in die zweite Zentrifuge Dampf bereitstellt.

9. Vorrichtung nach Anspruch 8, ferner umfassend:
einen Speichertank (66"), der das rückgewonnene Bohrfluid aus der zweiten Zentrifuge aufnimmt.

10. Vorrichtung nach Anspruch 9, worin die erste Zentrifuge das Gewichtungsmittel an den Speichertank und an das rückgewonnene Bohrfluid abführt.

11. Verfahren für das Rückgewinnen eines öl-basierten Bohrfluids, umfassend:
Mischen einer vorbestimmten Menge einer oberflächenaktiven Substanz (32) mit einem öl-basierten Bohrfluid (24), das Feststoffe zur Ausbildung eines mit einer oberflächenaktiven Substanz behandelten Bohrfluids enthält;
Mischen des mit einer oberflächenaktiven Substanz behandelten Bohrfluids mit einer vorbestimmten Menge eines Ausflockungspolymers (42) zur Ausbildung eines behandelten Bohrschlammes (54);
Mischen des behandelten Bohrschlammes und, in einer Vielzahl von in einer Reihe ausgerichteten Mischern (16, 18, 20, 21), Unterziehen des behandelten Bohrschlammes einem Scheren, um das Ausflockungspolymer überall im behandelten Bohrschlamm zu verteilen, um ein Anhaften der Feststoffe aus dem ölbasierten Bohrfluid am Ausflockungspolymer zu bewirken;
Trennen der am Ausflockungspolymer anhaftenden Feststoffe (60) vom behandelten Bohrschlamm;
Auffangen der abgetrennten Feststoffe; und
Auffangen des abfließenden Mediums (62).

12. Verfahren nach Anspruch 11, ferner umfassend das Mischen eines Basisfluids (46) in das Ausflockungspolymer hinein.

13. Verfahren nach Anspruch 11, worin der Trennungsschritt ferner das Einbringen des behandelten Bohrschlammes in eine Zentrifuge (58, 58') zur Entfernung von Feststoffen aus dem öl-basierten Bohrfluid umfasst.

14. Verfahren nach Anspruch 13, ferner umfassend das Einspritzen von Dampf in den behandelten Bohrschlamm.

15. Verfahren nach Anspruch 11, ferner umfassend das Trennen des Gewichtungsmittels (72) vom öl-basierten Bohrfluid mittels einer ersten Zentrifuge (70), bevor die vorbestimmte Menge der oberflächenaktiven Substanz mit diesem gemischt wird.

16. Verfahren nach Anspruch 15, ferner umfassend das Einspritzen von Dampf in den behandelten Bohrschlamm.

17. Verfahren nach Anspruch 15, ferner umfassend das Führen des abgetrennten Gewichtungsmittels zum aufgefangenen abfließenden Medium vom vorangegangenen Trennungsschritt.

18. Verfahren nach Anspruch 11, ferner umfassend das Einspritzen von Dampf in den behandelten Bohrschlamm.

## Revendications

1. Appareil pour la préparation d'un fluide de forage à base d'huile usé pour récupération, comprenant :
une première pompe doseuse (36) distribuant une quantité prédéterminée d'agent tensioactif (32) dans le fluide de forage à base d'huile (24) ;
un premier mélangeur statique (12) mélangeant le fluide de forage à base d'huile et le tensioactif pour former un fluide de forage traité par tensioactif ;
une deuxième pompe doseuse (50) distribuant une quantité prédéterminée de polymère floculant (42) dans le fluide de forage traité par tensioactif ; et
une pluralité de mélangeurs alignés en série (16, 18, 20, 21) ;
**caractérisé en ce que** :
les mélangeurs alignés en série sont disposés pour mélanger le fluide de forage traité par tensioactif et le polymère floculant.

2. Appareil selon la revendication 1, dans lequel la pluralité de mélangeurs alignés en série comprend un mélangeur dynamique (18).

3. Appareil selon la revendication 2, dans lequel la pluralité de mélangeurs alignés en série comprend un mélangeur statique (16).

4. Appareil selon la revendication 3, dans lequel la pluralité de mélangeurs alignés en série comprend une pluralité de mélangeurs statiques (16, 20, 21) en communication fluidique avec le mélangeur dynamique, les mélangeurs statiques cisaillant le fluide de forage traité par tensioactif et le polymère floculant pour disperser le polymère floculant dans tout le fluide de forage traité par tensioactif.

5. Appareil selon la revendication 1, comprenant en outre :
un premier débitmètre commandant le débit du fluide de forage dans la première mélangeur statique ; et
un second débitmètre commandant le débit du tensioactif dans le première mélangeur statique.

6. Appareil selon la revendication 1, comprenant en outre :
une troisième pompe doseuse (52) distribuant une quantité prédéterminée de fluide de base (46) dans le polymère floculant ; et
un mélangeur en ligne (14) cisaillant le fluide de base et le polymère floculant pour disperser le polymère floculant dans tout le fluide de base.

7. Appareil selon la revendication 1, comprenant en outre :
une première centrifugeuse (70) destinée à recevoir le fluide de forage à base d'huile, séparer un agent densifiant (72) du fluide, et diriger le fluide vers le premier mélangeur statique.

8. Appareil selon la revendication 7, comprenant en outre :
une seconde centrifugeuse (58') recevant le fluide traité et séparant les matières solides (60) du fluide de forage récupéré (62') ;
un générateur de vapeur (80) délivrant de la vapeur dans la boue traitée avant d'entrer dans la seconde centrifugeuse.

9. Appareil selon la revendication 8, comprenant en outre :
un réservoir de stockage (66") recevant le fluide de forage récupéré provenant de la seconde centrifugeuse.

10. Appareil selon la revendication 9, dans lequel la première centrifugeuse décharge l'agent densifiant dans le réservoir de stockage et dans le fluide de forage récupéré.

11. Procédé de récupération d'un fluide de forage à base d'huile comprenant les étapes consistant à :
mélanger une quantité prédéterminée d'agent tensioactif (32) avec un fluide de forage à base d'huile (24) contenant des matières solides pour former un fluide de forage traité par tensioactif ;
mélanger le fluide de forage traité par tensioactif avec une quantité prédéterminée de polymère floculant (42) pour former une boue traitée (54) ;
mélanger la boue traitée et soumettre la boue traitée à un cisaillement dans une pluralité de mélangeurs alignés en série (16, 18, 20, 21) pour disperser le polymère floculant dans toute la boue traitée afin d'amener les matières solides du fluide de forage à base d'huile à adhérer au polymère floculant ;
séparer les matières solides (60) adhérées au polymère floculant de la boue traitée ;
collecter les matières solides séparées ; et
collecter l'effluent (62).

12. Procédé selon la revendication 11, comprenant en outre le mélange d'un fluide de base (46) dans le polymère floculant.

13. Procédé selon la revendication 11, dans lequel l'étape de séparation comprend en outre l'introduction de la boue traitée dans une centrifugeuse (58, 58') pour retirer des matières solides du fluide de forage à base d'huile.

14. Procédé selon la revendication 13, comprenant en outre l'injection de vapeur dans la boue traitée.

15. Procédé selon la revendication 11, comprenant en outre la séparation de l'agent densifiant (72) du fluide de forage à base d'huile à l'aide d'une première centrifugeuse (70) avant de mélanger la quantité prédéterminée d'agent tensioactif avec celui-ci.

16. Procédé selon la revendication 15, comprenant en outre l'injection de vapeur dans la boue traitée.

17. Procédé selon la revendication 15, comprenant en outre de diriger l'agent densifiant séparé dans l'effluent collecté à partir de la dernière étape de séparation.

18. Procédé selon la revendication 11, comprenant en outre l'injection de vapeur dans la boue traitée.
